# EUROPÄISCHE PATENTSCHRIFT

(11) **EP 2 223 131 B1**
(45) Veröffentlichungstag und Bekanntmachung des Hinweises auf die Patenterteilung: **27.06.2012**
(21) Anmeldenummer: 08862854.0
(22) Anmeldetag: 06.11.2008
(51) Int. Cl.: H02P 6/20, G01R 31/34, H02P 6/16, H02P 6/18

(54) **VERFAHREN ZUM SENSORLOSEN BETREIBEN EINER ELEKTRISCHEN, ELEKTRONISCH KOMMUTIERENDEN MASCHINE**
METHOD FOR THE SENSORLESS OPERATION OF AN ELECTRIC, ELECTRONICALLY COMMUTATING MACHINE
PROCÉDÉ POUR FAIRE FONCTIONNER SANS CAPTEUR UNE MACHINE ÉLECTRIQUE À COMMUTATION ÉLECTRONIQUE

(30) Priorität: 18.12.2007 DE 102007060877
(43) Veröffentlichungstag der Anmeldung: 01.09.2010
(73) Patentinhaber: Robert Bosch GmbH, 70442 Stuttgart (DE)
(72) Erfinder: DOLL, Theo, 77815 Buehl (DE); KRAUTH, Wolfgang, 77855 Achern-Sasbachried (DE)
(86) Internationale Anmeldenummer: PCT/EP2008/065032
(87) Internationale Veröffentlichungsnummer: WO 2009/077258

(56) Entgegenhaltungen:
- EP-A- 0 800 257
- WO-A-2005/074118
- JP-A- 8 066 082
- JP-A- 2004 215 466

## Beschreibung

Die Erfindung betrifft ein Verfahren zum sensorlosen Betreiben einer elektrischen, mindestens zwei Phasen aufweisenden, elektronisch kommutierenden Maschine.

### Stand der Technik

Zur Einsparung von Kosten und Gewicht sowie zur Optimierung eines Bauraumbedarfs ist es bekannt, bei elektronisch kommutierenden elektrischen Maschinen auf die Erfassung einer Drehwinkelposition eines Rotors der elektrischen Maschine mittels eines entsprechenden Sensors zu verzichten. Bei einem derartigen sensorlosen Betreiben einer elektrischen Maschine kommt in der Regel ein Sinus/Kosinus-Anlaufverfahren zum Einsatz. Durch ein vorgegebenes Drehfeld wird dabei der Rotor der elektrischen Maschine gesteuert mitgeschleppt. Bei Überschreiten einer vorab bestimmten Rotordrehzahl, wird auf eine sensorlose Kommutierungs-Logik umgeschaltet. Bei einem derartigen Anlaufen der elektrischen Maschine kommt es jedoch zu einem erhöhten Anlaufgeräusch sowie einer erhöhten thermischen Belastung von den die elektrische Maschine ansteuernden Leistungshalbleitern.

Die WO 2005/074118 A betrifft ein Verfahren zum Starten einer elektronisch kommutierenden Maschine. Der Startvorgang umfasst das Positionieren des Rotors in einer Vorbereitungs-Position durch Erhöhen eines Gleichspannungs-Erregerstroms bis zu einem ersten Wert, sowie das anschließende Erhöhen des Gleichspannungs-Erregerstroms bis zu einem zweiten Wert, der größer als der erste Wert ist, um den Rotor von der Vorbereitungsposition in eine Start-Position zu bewegen.

Aus der EP 0 800 257 A1 ist ferner ein Verfahren zum Magnetisieren des Rotors eines Reluktanzmotors bekannt. Dabei werden zwei von drei Phasen zusammengefasst bzw. gekoppelt und ein Strom zwischen diesen gekoppelten Phasen und einer dritten Phase eingestellt, um den Rotor in eine Magnetisierungs-Position zu drehen. Sobald sich der Rotor in der Magnetisierungs-Position befindet, wird er arretiert und anschließend werden die zusammengefassten Phasen wieder getrennt und zwischen diesen Phasen ein Magnetisierungsstrom eingestellt.

### Offenbarung der Erfindung

Das erfindungsgemäße Verfahren zum sensorlosen Betreiben einer elektrischen, mindestens zwei Phasen aufweisenden, elektronisch kommutierenden Maschine, deren Phassen durch eine 2H-, 3H-, oder 4H-Brücke angesteuert werden, sieht nach Anspruch 1 folgende Schritte vor:
- Positionieren eines Rotors der elektrischen Maschine in einer vorgebbaren Drehwinkelposition (Festziehposition) durch elektrisches Ansteuern der elektrischen Maschine, wobei das Ansteuern durch Bestromen mindestens einer ersten Phase der elektrischen Maschine für eine vorgebbare, erste Zeitdauer erfolgt, und
- anschließendes Einleiten einer Drehbewegung des Rotors durch Bestromen einer zweiten Phase für eine vorgebbare, zweite Zeitdauer bei nicht bestromter erster Phase, wobei die zweite Phase der elektrischen Maschine während der ersten Zeitdauer kurzgeschlossen wird.

Im Kontext der vorliegenden Erfindung sind unter den Phasen der elektrischen Maschine unterschiedliche, jeweils eine Phase bildende Phasen-Wicklungen einer Rotor- und/oder Ständerwicklung der elektrischen Maschine zu verstehen. Es ist also vorgesehen, dass zunächst der Rotor der elektrischen Maschine in eine bestimmte/vorgebbare Drehwinkelposition positioniert wird. Vorteilhafterweise ist diese Drehwinkelposition eine für den späteren Anlauf der elektrischen Maschine günstig liegende Drehwinkelposition des Rotors. Hierbei wird durch Bestromen der ersten Phase der elektrischen Maschine der Rotor positioniert, wobei das Bestromen für die erste Zeitdauer, die vorab bestimmt wird, erfolgt.

Besonders vorteilhaft erfolgt die Bestromung der ersten Phase langsam ansteigend. Das Bestromen der ersten Phase, während die zweiter Phase nicht bestromt ist, führt dazu, dass der Rotor in eine Pendelbewegung versetzt wird, wobei der Pendelwinkel mit der Zeit abnimmt, bis der Rotor in der vorgebbaren Drehwinkelposition positioniert beziehungsweise festgezogen ist. Anschließend wird eine Drehbewegung des Rotors dadurch eingeleitet, dass die zweite Phase für eine vorgebbare, zweite Zeitdauer bestromt wird, während die erste Phase nicht bestromt wird. Durch das Festziehen des Rotors in die vorgebbare Drehwinkelposition ist es durch Bestromen der zweiten Phase möglich, die Drehbewegung des Rotors in eine gewünschte Drehrichtung sicher einzuleiten. Das heißt, mit dem vorteilhaften Verfahren ist es möglich, auf einfache Art und Weise ohne Hinzunahme eines entsprechenden Sensors den Rotor der elektrischen Maschine in eine gewünschte Drehrichtung anlaufen zu lassen, bevor auf eine elektronische Kommentierungs-Logik umgestellt wird. Darüber hinaus entstehen bei dem vorteilhaften Verfahren nur geringe Anlaufgeräusche. Außerdem sinkt im Vergleich zu bekannten Verfahren die thermische Belastung von einer Ansteuerungselektronik der elektrischen Maschine, da die Phasen nunmehr in optimalen Drehmomentbereichen für die Beschleunigung bestromt werden können.

Durch die Pendelbewegung des Rotors wird eine Spannung in die zweite Phase induziert, deren daraus resultierender Stromfluss sich bremsend auf die Pendelbewegung auswirkt. Durch das Kurzschließen der zweiten Phase während der ersten Zeitdauer wird somit erreicht, dass der Rotor schneller festgezogen wird beziehungsweise schneller auf der Festziehposition zum Stillstand kommt. Aufgrund der verkürzten Pendelzeit wird ein besonders schneller Anlauf der elektrischen Maschine ermöglicht.

Vorteilhafterweise wird die zweite Zeitdauer in Abhängigkeit von der Massenträgheit des Rotors und/oder eines davon angetriebenen Elements oder Aggregats gewählt Es muss beim Anlaufen sichergestellt werden, dass beim Bestromen der zweiten Phase für die zweite Zeitdauer der Rotor ausreichend weit gedreht wird. Dies hängt in erster Linie von der Massenträgheit des Rotors und darüber hinaus auch von einem von dem Rotor angetriebenen Element, wie zum Beispiel einem Lüfterrad oder ein Aggregat, ab.

Bevorzugt wird zur Bestimmung der Kommutierungszeit ein Nulldurchgang einer induzierten Spannung in zumindest einer der Phasen ermittelt. Hierzu wird zweckmäßigerweise ein Messfenster vorgegeben, innerhalb dessen ein derartiger Nulldurchgang erwartet wird. Durch Vorgabe des Messfensters wird erreicht, dass lediglich ein vorgebbarer Zeitbereich auf das Auftreten eines Nulldurchgangs der indizierten Spannung geprüft wird, sodass eine Fehlansteuerung der elektrischen Maschine ausgeschlossen wird.

Der weitere Ablauf des Verfahrens gestaltet sich derart, dass nach Ablauf der zweiten Zeitdauer die erste Phase bis zu einem Zeitpunkt, der um 1/8 einer ersten Kommutierungszeit über die erste Kommutierungszeit hinaus geht, umgekehrt bestromt und dann wieder abgeschaltet wird. Nach dem Abschalten der ersten Phase wird die zweite Phase bis zu einem Zeitpunkt, der um ¼ einer zweiten Kommutierungszeit über die zweite Kommutierungszeit hinaus geht, umgekehrt bestromt und dann wieder abgeschaltet. Nach dem Abschalten der zweiten Phase wird sodann die erste Phase bis zu einem Zeitpunkt, der um ¼ einer dritten Kommutierungszeit über die dritte Kommutierungszeit hinaus geht, bestromt und dann wieder abgeschaltet wird. Schließlich wird nach dem Abschalten der ersten Phase die zweite Phase bis zu einem Zeitpunkt, der um ¼ einer vierten Kommutierungszeit über die vierte Kommutierungszeit hinaus geht, bestromt und dann wieder abgeschaltet wird. Dieser Ablauf seit dem Ablauf der zweiten Zeitdauer wiederholt sich fortan, wobei der Umschaltzeitpunkt zwischen der ersten und der zweiten Phase stets um ¼ der vorangegangenen Kommutierungszeit über die vorangegangene Kommutierungszeit hinaus geht.

Nach einer vorteilhaften Weiterbildung der Erfindung werden als elektrisches Steuerelement zum Ansteuern der elektrischen Maschine mindestens zwei Leistungshalbleiter(-Endstufen), besonders bevorzugt mindestens zwei MOSFET-Transistoren verwendet.

Schließlich ist vorgesehen, dass als elektrische Maschine ein Lüftermotor, insbesondere eines Kraftfahrzeugs, verwendet wird.

### Kurze Beschreibung der Zeichnungen

Im Folgenden soll die Erfindung anhand einiger Zeichnungen näher erläutert werden. Dazu zeigen im Folgenden
- Figur 1: einen Anlaufvorgang einer elektrischen Maschine in einer schematischen Darstellung,
- Figur 2: eine Bestromung der elektrischen Maschine in einer schematischen Darstellung,
- Figur 3: eine 2H-Schaltung der elektrischen Maschine,
- Figur 4: einen ersten Schaltzustand der 2H-Schaltung,
- Figur 5: einen zweiten Schaltzustand der 2H-Schaltung und
- Figur 6: einen dritten Schaltzustand der 2H-Schaltung.

### Ausführungsform(en) der Erfindung

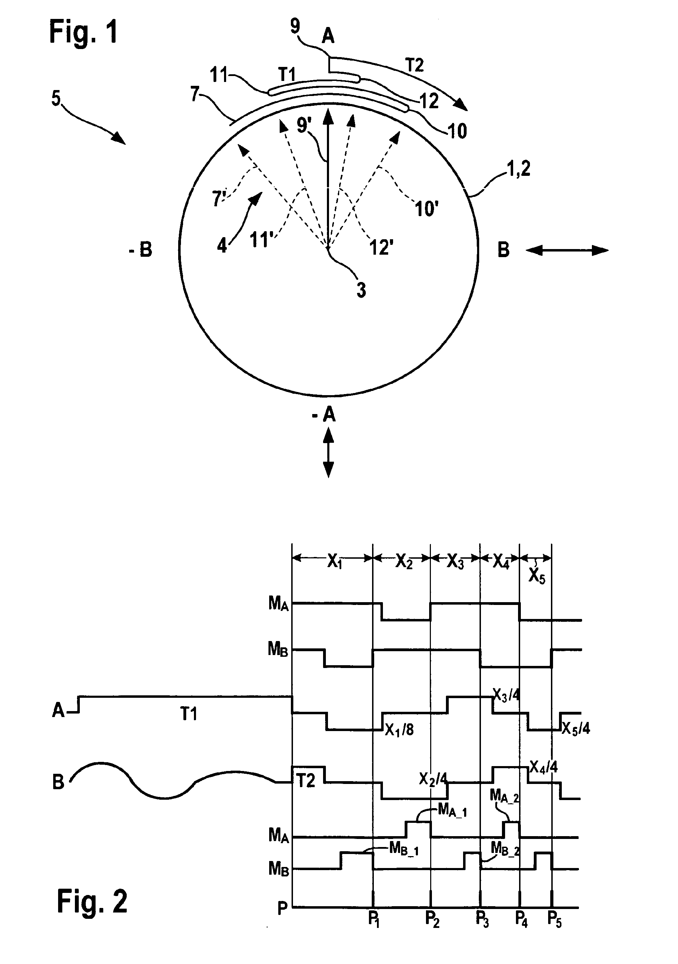

Die Figur 1 zeigt in einer schematischen Darstellung ein Ausführungsbeispiel des vorteilhaften Verfahrens zum sensorlosen Betreiben einer elektrischen Maschine, die mindestens zwei Phasen aufweist und elektronisch kommutiert. Die Figur 1 zeigt einen als Kreis dargestellten Umfang eines Rotors 2, der um eine senkrecht zur Papierebene liegende Achse 3 drehbar gelagert ist. Unterschiedliche Drehwinkelstellungen des Rotors 2 sind durch mehrere, teilweise gestrichelt dargestellte, radial von der Achse 3 ausgehende Pfeile 4 angedeutet. Die den Rotor 2 aufweisende elektrische Maschine 5 - hier nicht näher dargestellt - weist eine Wicklung mit zwei Phasen (beziehungsweise Wicklungsphasen) A und B auf. Ein Pfeil 6 zeigt beispielhaft einen Bewegungsablauf des Rotors 2 der elektrischen Maschine 5 bei einem Anlauf-Vorgang. Zunächst ist davon auszugehen, dass der Rotor 2 aus einer Bewegung heraus in einer beliebigen/zufälligen Position 7, gekennzeichnet durch einen Pfeil 7' der Pfeile 4, zum Stehen kommt. Die Position 7 stellt somit die Startposition für den Anlauf der elektrischen Maschine 5 dar. Bei üblichen, sensorlosen Anläufen einer derartigen elektrischen Maschine kommt in der Regel ein Sinus/Kosinus-Anlaufverfahren zum Einsatz, wobei der Rotor 2 durch ein vorgegebenes Drehfeld gesteuert mitgeschleppt und bei Überschreiten einer festgelegten Drehzahl des Rotors 2 auf die sensorlose Kommutierungs-Logik umgeschaltet wird. Hierdurch kommt es jedoch zu hohen Anlaufgeräuschen sowie zu einer hohen thermischen Belastung von Leistungshalbleitern, die als Steuerelemente der elektrischen Maschine 5 dienen. Um diese Nachteile zu umgehen wird das Folgende vorgeschlagen:

Zunächst wird die Phase A für eine vorgebbare, erste Zeitdauer T1 bestromt, wie in der Figur 2 dargestellt. Die Figur 2 zeigt hierbei eine schematische Übersicht über den Bestromungsablauf der elektrischen Maschine 5 des vorteilhaften Verfahrens. Dazu sind in der Figur 2 die zeitlichen Verläufe der Bestromung der Phase A, der Phase B, einer in die Phase 1 induzierten Spannung U_{A}, einer in die Phase B induzierten Spannung U_{B}, eines Messfensters M_{A}, innerhalb dessen die in die Phase A induzierte Spannung U_{A} auf einen Nulldurchgang überwacht wird, eines Messfensters M_{B}, innerhalb dessen eine in die Phase B induzierte Spannung U_{B} auf einen Nulldurchgang überwacht wird, sowie von Kommutierungspulsen P dargestellt.

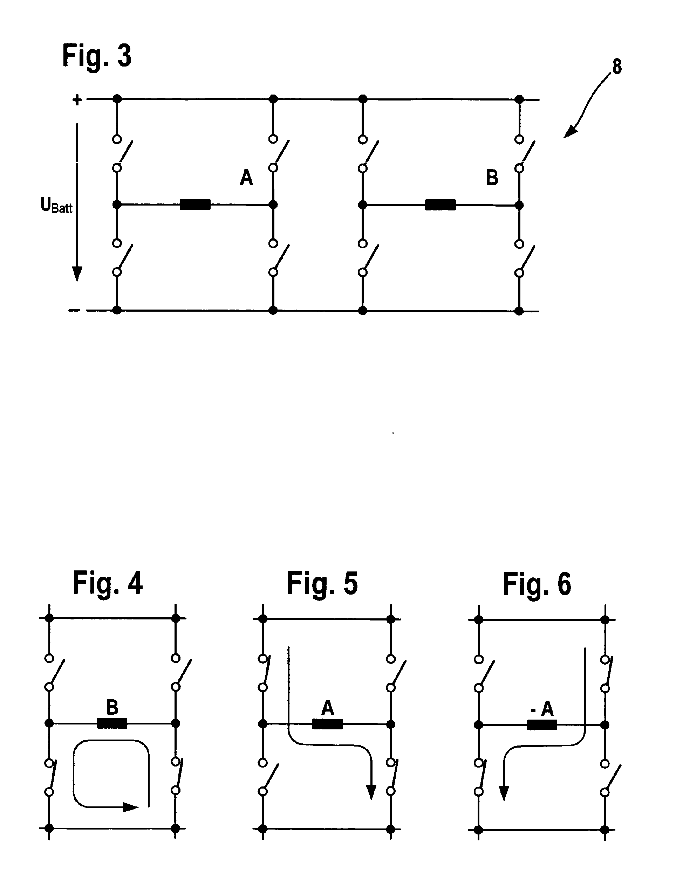

Die Figur 3 zeigt eine entsprechende 2H-Schaltung als Steuerelement beziehungsweise -einrichtung zum Ansteuern der elektrischen Maschine 5, wobei die elektrischen Schalter als MOSFET-Transistoren ausgebildet sind. Die Schaltung 8 steuert die Phasen A und B und ist mit einer Spannungsquelle U_{Batt} verbunden, die beispielsweise als Batterie ausgebildet ist. Die Schaltung 8 ist in dem Zustand dargestellt, in dem die elektrische Maschine 5 nicht angetrieben/angesteuert wird, wobei sämtliche Schalter geöffnet sind.

Die Figuren 4, 5 und 6 zeigen die Endstufen der Phasen A und B der Schaltung 8 in unterschiedlichen Schaltzuständen. Um die Phase A für die erste Zeitdauer T1, wie in der Figur 2 dargestellt, zu bestromen, wird die Schaltung 8 wie in der Figur 4 dargestellt geschaltet, wobei die Phase A vorzugsweise langsam ansteigend bestromt wird. Durch das resultierende Drehmoment wird der Rotor 2, wie in der Figur 1 dargestellt, in eine Drehbewegung im Uhrzeigersinn gebracht. Durch das Bestromen der Phase A wie in der Figur 2 dargestellt, wird der Rotor 2 in eine durch die Anordnung der Phase A vorgebbare Drehwinkelposition 9, die sogenannte Festziehposition, (fest-)gezogen. Die Lage des Rotors ist hierbei durch einen Pfeil 9' in der Festziehposition dargestellt. Aufgrund der Massenträgheit des Rotors 2 dreht der Rotor 2 zunächst über die vorgegebene Drehwinkelposition 9 hinaus bis zu einem Wendepunkt 10 - gekennzeichnet durch einen Pfeil 10', von der aus der Rotor 2 zurück - entgegen dem Uhrzeigersinn - in eine Position 11, gekennzeichnet durch einen Pfeil 11', pendelt, von der der Rotor 2 wieder über die Festziehposition 9 hinaus in eine Position 12, gekennzeichnet durch einen Pfeil 12', - im Uhrzeigersinn - pendelt, bevor er in der vorgegebenen Drehwinkelposition 9 (Festziehposition) zum Stillstand kommt beziehungsweise festgezogen wird.

Um die Pendelbewegung des Rotors 2 zu dämpfen und dadurch die notwendige Zeitdauer zum Festziehen des Rotors 2 auf der Drehwinkelposition 9 zu verkürzen, wird während der ersten Zeitdauer T1 vorteilhafterweise die (Spule/Phasenwicklung der) Phase B durch die Low-Side-Schalter kurzgeschlossen, wie in der Figur 4 dargestellt. Durch die Pendelbewegung des Rotors 2 wird eine Spannung induziert, und der daraus resultierende Stromfluss wirkt bremsend auf die Pendelbewegung. Die Zeitdauer T1 wird daher zweckmäßigerweise in Abhängigkeit von die Drehbewegung des Rotors betreffenden Massenträgheiten derart gewählt, dass der Rotor innerhalb der Zeitspanne T1 in der Festziehposition zum Stillstand kommt.

Mit einer darauf folgenden Bestromung der Phase B beschleunigt der Rotor in die gewünschte Richtung, wobei die Zeitdauer T2, für die die Phase B bestromt wird, auf die Masseträgheit des Rotors und/oder des Lüfterrads abgestimmt sein muss. Während der zweiten Zeitdauer T2 wird die Phase A nicht bestromt. Als nächstes wird die Phase A umgekehrt bestromt (-A), wie in der Figur 6 dargestellt. Nach einer Ausblendzeit ist eine Kommutierungserkennung auf eine induzierte Spannung möglich (Back EMF). Während des Messfensters M_{B_1}, wie in der Figur 2 dargestellt, wird ein Nulldurchgang der in die Spule B induzierten Spannung U_{B} erwartet. Wird ein Nulldurchgang der induzierten Spannung U_{B} erkannt, so ergibt die Zeit seit dem Einschalten der Phase B bis zur Erkennung des Nulldurchgangs die Kommutierungszeit X₁. Die Phase A bleibt noch X₁/8 umgekehrt bestromt, ehe sie abgeschaltet und die Phase B umgekehrt bestromt (-B) wird.

Als Nächstes wird der Kommutiervorgang ausgeblendet. Erst dann wird während eines Messfensters M_{A_1} ein Nulldurchgang der induzierten Spannung U_{A} erwartet. Die Zeit zwischen den beiden Kommutierungsimpulsen P₁ und P₂ ergibt die Kommutierungszeit X₂. Die Phase B bleibt noch X₂/4 umgekehrt bestromt, ehe sie abgeschaltet und die Phase A (positiv) bestromt wird.

Anschließend wird der Kommutierungsvorgang ausgeblendet. Erst dann wird während eines weiteren Messfensters M_{B_2} wieder ein Nulldurchgang der induzierten Spannung U_{B} erwartet. Die Zeit zwischen den beiden Kommutierungsimpulsen P₂ und P₃ ergibt die Kommutierungszeit X₃. Die Phase A bleibt noch X₃/4 bestromt, ehe sie abgeschaltet und die Phase B eingeschaltet **beziehungsweise bestromt wird.**

Als Nächstes wird der Umschaltvorgang/Kommutierungsvorgang ausgeblendet. Erst dann wird während eines weiteren Messfensters M_{A_2} ein Nulldurchgang der induzierten Spannung U_{A} erwartet. Die Zeit zwischen den beiden Kommutierungsimpulsen P₃ und P₄ ergibt die Kommutierungszeit X₄. Die Phase B bleibt noch X₄/4 eingeschaltet/bestromt, ehe sie abgeschaltet und die Phase A umgekehrt bestromt/eingeschaltet (-A) wird.

Dieser Ablauf wiederholt sich von nun an stetig.

Insgesamt erlaubt also das vorteilhafte Verfahren einen besonders schnellen und geräuscharmen Anlauf der elektrischen Maschine 5 ohne hohe thermische Belastungen für die Leistungshalbleiter beziehungsweise Endstufen der Phasen A und B. Das vorteilhafte Verfahren kann sowohl bei Innenläufer- als auch bei Außenläufermotoren gleichermaßen angewendet werden. Die Wicklung kann also am Rotor und/oder an einem Ständer der elektrischen Maschine angeordnet sein.

## Patentansprüche

1. Verfahren zum sensorlosen Betreiben einer elektrischen, mindestens zwei Phasen (A, B) aufweisenden, elektronisch kommutierenden Maschine (5), deren Phasen (A, B) durch mindestens eine 2H- (8), 3H-, oder 4H-Brücke angesteuert werden, mit folgenden Schritten:
- Positionieren eines Rotors (2) der elektrischen Maschine (5) in eine vorgebbare Drehwinkelposition (9) durch elektrisches Ansteuern der elektrischen Maschine (5), wobei das Ansteuern durch Bestromen mindestens einer ersten Phase (A) der elektrischen Maschine (5) für eine vorgebbare, erste Zeitdauer (T1) erfolgt,
- anschließendes Einleiten einer Drehbewegung des Rotors (2) durch Bestromen einer zweiten Phase (B) für eine vorgebbare, zweite Zeitdauer (T2) bei nicht bestromter erster Phase (A),
**dadurch gekennzeichnet, dass** die zweite Phase (B) der elektrischen Maschine (5) während der ersten Zeitdauer (T1) kurzgeschlossen wird.

2. Verfahren nach Anspruch 1, **dadurch gekennzeichnet, dass** die zweite Zeitdauer (T2) in Abhängigkeit von der Massenträgheit des Rotors (2) und/oder eines davon angetriebenen Elements gewählt wird.

3. Verfahren nach einem der vorhergehenden Ansprüche, **dadurch gekennzeichnet, dass** zur Bestimmung einer Kommutierungszeit (X) ein Nulldurchgang einer induzierten Spannung (U_{A}, U_{B}) in zumindest einer der Phasen (A, B) ermittelt wird.

4. Verfahren nach einem der vorhergehenden Ansprüche, **dadurch gekennzeichnet, dass** nach Ablauf der zweiten Zeitdauer (T2) die erste Phase (A) bis zu einem Zeitpunkt, der um 1/8 einer ersten Kommutierungszeit (X₁) über die erste Kommutierungszeit (X₁) hinaus geht, umgekehrt bestromt (-A) und dann wieder abgeschaltet wird.

5. Verfahren nach Anspruch 4, **dadurch gekennzeichnet, dass** nach dem Abschalten der ersten Phase (A) die zweite Phase (B) bis zu einem Zeitpunkt, der um ¼ einer zweiten Kommutierungszeit (X₂) über die zweite Kommutierungszeit (X₂) hinaus geht, umgekehrt bestromt (-B) und dann wieder abgeschaltet wird.

6. Verfahren nach Anspruch 5, **dadurch gekennzeichnet, dass** nach dem Abschalten der zweiten Phase (B) die erste Phase (A) bis zu einem Zeitpunkt, der um ¼ einer dritten Kommutierungszeit (X₃) über die dritte Kommutierungszeit (X₃) hinaus geht, bestromt und dann wieder abgeschaltet wird.

7. Verfahren nach Anspruch 6, **dadurch gekennzeichnet, dass** nach dem Abschalten der ersten Phase (A) die zweite Phase (B) bis zu einem Zeitpunkt, der zum ¼ einer vierten Kommutierungszeit (X₄) über die vierte Kommutierungszeit (X₄) hinaus geht, bestromt und dann wieder abgeschaltet wird, wobei sich der gesamte Ablauf seit dem Ablauf der zweiten Zeitdauer (T2) fortan wiederholt und der Umschaltzeitpunkt zwischen der ersten und der zweiten Phase (A, B) stets um ¼ der vorangegangenen Kommutierungszeit (X) über die vorangegangene Kommutierungszeit (X) hinaus geht

8. Verfahren nach einem der vorhergehenden Ansprüche, **dadurch gekennzeichnet, dass** als elektrisches Steuerelement mindestens ein Leistungshalbleiter, insbesondere MOS FET-Transistor verwendet wird.

9. Verfahren nach einem der vorhergehenden Ansprüche, **dadurch gekennzeichnet, dass** als elektrische Maschine (5) ein Lüftermotor verwendet wird.

## Claims

1. Method for the sensorless operation of an electric, electronically commutating machine (5) having at least two phases (A, B), the phases (A, B) being driven by at least one 2H (8), 3H or 4H bridge, having the following steps:
- positioning a rotor (2) of the electric machine (5) into a predeterminable rotation angle position (9) by electrically driving the electric machine (5), the driving being performed by energizing at least one first phase (A) of the electric machine (5) for a predeterminable, first time period (T1),
- then introducing a rotary movement of the rotor (2) by energizing a second phase (B) for a predeterminable, second time period (T2) when the first phase (A) is not energized,
**characterized in that** the second phase (B) of the electric machine (5) is short-circuited during the first time period (T1).

2. Method according to Claim 1, **characterized in that** the second time period (T2) is selected depending on the mass inertia of the rotor (2) and/or an element driven thereby.

3. Method according to one of the preceding claims, **characterized in that**, in order to determine a commutation time (X), a zero crossing of an induced voltage (U_{A}, U_{B}) in at least one of the phases (A, B) is determined.

4. Method according to one of the preceding claims, **characterized in that**, once the second time period (T2) has elapsed, the first phase (A) is inversely energized (-A) up to a time which goes beyond a first commutation time (X₁) by 1/8 of the first commutation time (X₁) and is then switched off again.

5. Method according to Claim 4, **characterized in that**, once the first phase (A) has been switched off, the second phase (B) is inversely energized (-B) up to a time which goes beyond a second commutation time (X₂) by ¼ of the second commutation time (X₂), and is then switched off again.

6. Method according to Claim 5, **characterized in that**, once the second phase (B) has been switched off, the first phase (A) is energized up to a time which goes beyond a third commutation time (X₃) by ¼ of the third commutation time (X₃), and is then switched off again.

7. Method according to Claim 6, **characterized in that**, once the first phase (A) has been switched off, the second phase (B) is energized up to a time which goes beyond a fourth commutation time (X₄) by ¼ of the fourth commutation time (X₄) and is then switched off again, the total time elapsed since the lapse of the second time period (T2) being repeated from this time on and the switchover time between the first and second phases (A, B) always going beyond the preceding commutation time (X) by ¼ of the preceding commutation time (X).

8. Method according to one of the preceding claims, **characterized in that** at least one power semiconductor, in particular a MOSFET transistor, is used as electrical control element.

9. Method according to one of the preceding claims, **characterized in that** a fan motor is used as electric machine (5).

## Revendications

1. Procédé pour faire fonctionner sans capteur une machine électrique (5) à commutation électronique présentant au moins deux phases (A, B), dont les phases (A, B) sont commandées par au moins un pont 2H (8), 3H ou 4H, comprenant les étapes suivantes :
- positionnement d'un rotor (2) de la machine électrique (5) dans une position angulaire de rotation (9) pouvant être prédéfinie par commande électrique de la machine électrique (5), la commande s'effectuant en mettant sous tension au moins une première phase (A) de la machine électrique (5) pendant une première durée (T1) qui peut être prédéfinie,
- puis initiation d'un mouvement de rotation du rotor (2) par mise sous tension d'une deuxième phase (B) pendant une deuxième durée (T2) qui peut être prédéfinie alors que la première phase (A) n'est pas sous tension,
**caractérisé en ce que** la deuxième phase (B) de la machine électrique (5) est court-circuitée pendant la première durée (T1).

2. Procédé selon la revendication 1, **caractérisé en ce que** la deuxième durée (T2) est sélectionnée en fonction de l'inertie des masses du rotor (2) et/ou d'un élément entraîné par celui-ci.

3. Procédé selon l'une des revendications précédentes, **caractérisé en ce qu'**un passage par zéro d'une tension induite (U_{A}, U_{B}) dans au moins l'une des phases (A, B) est déterminé afin de définir un temps de commutation (X).

4. Procédé selon l'une des revendications précédentes, **caractérisé en ce qu'**après écoulement de la deuxième durée (T2), la première phase (A) est mise sous tension inverse (-A) jusqu'à un instant qui se trouve à 1/8 d'un premier temps de commutation (X₁) au-delà du premier temps de commutation (X₁), puis est de nouveau mise hors tension.

5. Procédé selon la revendication 4, **caractérisé en ce qu'**après la mise hors tension de la première phase (A), la deuxième phase (B) est mise sous tension inverse (-B) jusqu'à un instant qui se trouve à 1/4 d'un deuxième temps de commutation (X₂) au-delà du deuxième temps de commutation (X₂), puis est de nouveau mise hors tension.

6. Procédé selon la revendication 5, **caractérisé en ce qu'**après la mise hors tension de la deuxième phase (B), la première phase (A) est mise sous tension jusqu'à un instant qui se trouve à 1/4 d'un troisième temps de commutation (X₃) au-delà du troisième temps de commutation (X₃), puis est de nouveau mise hors tension.

7. Procédé selon la revendication 6, **caractérisé en ce qu'**après la mise hors tension de la première phase (A), la deuxième phase (B) est mise sous tension jusqu'à un instant qui se trouve à 1/4 d'un quatrième temps de commutation (X₄) au-delà du quatrième temps de commutation (X₄), puis est de nouveau mise hors tension, l'ensemble du processus depuis l'écoulement de la deuxième durée (T2) se répétant dorénavant et l'instant d'inversion entre la première et le deuxième phase (A, B) se trouvant toujours à 1/4 du temps de commutation précédent (X) au-delà du temps de commutation précédent (X).

8. Procédé selon l'une des revendications précédentes, **caractérisé en ce que** l'élément de commande électrique utilisé est au moins un semiconducteur de puissance, notamment un transistor MOSFET.

9. Procédé selon l'une des revendications précédentes, **caractérisé en ce que** la machine électrique (5) utilisée est un moteur de ventilateur.
